# EUROPÄISCHE PATENTSCHRIFT

(11) **EP 3 606 779 B1**
(45) Veröffentlichungstag und Bekanntmachung des Hinweises auf die Patenterteilung: **20.01.2021**
(21) Anmeldenummer: 19711852.4
(22) Anmeldetag: 12.03.2019
(51) Int. Cl.: B60H 1/34

(54) **LUFTLEITELEMENT MIT REIBELEMENT UND LUFTAUSSTRÖMER**
AIR GUIDANCE ELEMENT WITH FRICTION ELEMENT AND AIR OUTLET
ÉLÉMENT DE GUIDAGE D'AIR COMPRENANT UN ÉLÉMENT DE FRICTION ET UN DIFFUSEUR D'AIR

(30) Priorität: 13.03.2018 DE 102018105759
(43) Veröffentlichungstag der Anmeldung: 12.02.2020
(73) Patentinhaber: Dr. Schneider Kunststoffwerke GmbH, 96317 Kronach-Neuses (DE)
(72) Erfinder: CAMPANARO, Roberto, 96052 Bamberg (DE); GAREIS, Jenny, 96346 Wallenfels (DE)
(86) Internationale Anmeldenummer: PCT/EP2019/056103
(87) Internationale Veröffentlichungsnummer: WO 2019/175139

(56) Entgegenhaltungen:
- DE-A1- 19 745 871
- DE-U1- 20 309 732
- US-A1- 2006 040 606

## Beschreibung

Es werden ein Luftleitelement mit Reibelement und ein Luftausströmer mit mindestens einem Luftleitelement beschrieben, wobei ein Reibelement vorgesehen ist, das zur Bereitstellung einer definierbaren Bedienkraft beim Verschwenken der Luftleitelemente eines Luftausströmers dient.

Luftausströmer dienen zur Ablenkung von ausgegebener Luft, die von einer Klimaanlage oder von einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in einen Fahrgastraum eines Fahrzeugs zu bringen. Fahrzeuge können beispielsweise Kraftfahrzeuge wie Pkw, Lkw oder Busse, Züge, Flugzeuge oder Schiffe sein. Bei Luftausströmern kann in der Regel neben der Steuerung der Ablenkung von ausgegebener Luft auch die Menge an ausgegebener Luft geregelt werden. Die Menge der zugeführten Luft wird über eine Steuereinrichtung geregelt, die beispielsweise mit einer Bedieneinrichtung zum Verschwenken von Luftleitelementen, wie beispielsweise Lamellen, oder getrennt von einer solchen Bedieneinrichtung neben einer Ausströmöffnung angeordnet ist. Luftausströmer können in einem Fahrzeugarmaturenbrett oder im Bereich der A-, B- oder C-Säule oder am Dach eines Kraftfahrzeugs angeordnet sein.

Das Verschwenken von Luftleitelementen kann auch über ein weiteres Luftleitelement erfolgen, das mit diesen über beispielsweise eine Koppelstange verbunden ist. Ein weiteres Luftleitelement kann beispielsweise auch rahmenförmig ausgebildet sein. Ein Verschwenken des Rahmens ermöglicht daher ein Verschwenken der Lamellen. Das Luftleitelement kann darüber hinaus beweglich mit der Koppelstange über abstehende Arme verbunden sein, sodass auch ein Verdrehen des rahmenförmigen Luftleitelements ohne ein Verschwenken der Luftleitelemente, die als Lamellen ausgebildet sind, durchgeführt werden kann.

### Stand der Technik

Luftausströmer mit Luftleitelementen, die beispielsweise als Lamellen ausgebildet sind, weisen Koppelelemente auf, über welche die Luftleitelemente miteinander gekoppelt sind. Die Bedienkraft zum Verschwenken der Luftleitelemente ist dabei von einer Vielzahl von Faktoren abhängig. Zum einen unterliegt die Bedienkraft den verwendeten Materialien sowie den Abmessungen der Luftleitelemente sowie auch Fertigungstoleranzen der Luftleitelemente, der Koppelstange und auch Lageröffnungen eines Gehäuses. Zur Einstellung von bestimmten Bedienkräften werden daher Reibelemente eingesetzt. Die Reibelemente dienen zur Erzeugung einer definierten Bedienkraft.

Aus DE 20 2004 014 490 U1 ist ein Luftausströmer mit verstellbaren Luftleitelementen bekannt, die als Lamellen ausgebildet sind, wobei Reibelemente in einer Aussparung eines Gehäuses des Luftausströmers aufgenommen sind und die Reibelemente klammerartig Lagerzapfen der Lamellen umgreifen.

DE 20 2008 008 882 U1 offenbart ferner ein Lager für ein verschwenkbar gelagertes Luftleitelement, wobei Lagerbuchsen bildende Lagerausnehmungen oder Durchgangsbohrungen in seitlichen Wänden eines Gehäuses des Luftausströmers vorgesehen sind und mindestens ein Lagerzapfen stirnseitig in dem Lager federnd abgestützt ist, wobei eine Federanordnung mit einer Reibfläche an der Stirnfläche des Lagerzapfens bewegungsdämpfend anliegt.

EP 2 520 449 B1 offenbart eine Belüftungsanordnung für ein Kraftfahrzeug mit einer Vielzahl von als Lamellen ausgebildeten Luftleitelementen, die über ein Gehäuse und Abstandsleisten gehalten werden. Die Abstandsleisten weisen Aufnahmeräume für Dämpferbuchsen auf, wobei die Lagerzapfen der Lamellen durch Öffnungen in den Abstandsleisten in korrespondierende Öffnungen der Dämpferbuchsen ragen.

Die bekannten Anordnungen mit Reibelementen betreffen daher entweder Lösungen mit eingesetzten Reibelementen oder weisen separate Reibelemente auf, die abseits gelagert angeordnet sind.

Wesentlich für eine gute Reibung und damit Bedienkrafterzeugung ist jedoch die Wirkung der Reibelemente auf die Dreh- bzw. Schwenkachse von Luftleitelementen. Die Anordnung der Reibelemente, Dämpferbuchsen oder Klammern aus dem Stand der Technik ermöglicht eine Einwirkung auf die Lagerzapfen der Lamellen. Da die Lamellen beim Verschwenken, vor allem aufgrund deren Kopplung, über die Lagerzapfen in den Lageraufnahmen eine Bewegung erfahren, wirken die Reibelemente oftmals ungleichmäßig auf die Lagerzapfen.

Ein Verschwenken der Lamellen kann beispielsweise einen Druck auf die Lagerzapfen ausüben, sodass der Druck auf einen unteren Bereich von Lagerbuchsen bei einem Verschwenken nach unten größer ist als in dem gegenüberliegenden Bereich, wobei der gegenüberliegende Bereich der Lagerbuchse bei einem Verschwenken nach oben stärker beansprucht wird. Hierüber ergeben sich daher verschiedene Reibmomente und die Bedienkraft wird von einem Benutzer als unterschiedlich wahrgenommen.

US 2006 /0 040 606 A1 offenbart eine Lageranordnung für einen Luftausströmer mit schwenkbaren Lamellen zur Luftablenkung. Die Achse einer Lamelle mit Betätigungselement ragt durch eine Öffnung in der Gehäusewand. Dahinter befindet sich in einem Hohlraum eine elastische Klammer, welche die Achse der Lamelle umfasst und durch ihre Elastizität eine Druckkraft an der Achse ausübt, wodurch beim Verschwenken der Lamelle eine Reibkraft entsteht.

### Aufgabe

Es ist daher Aufgabe die Einstellung einer Bedienkraft und die Beibehaltung der Bedienkraft beim Verschwenken von Luftleitelementen zu verbessern, wobei die Bedienkraft im Wesentlichen konstant gehalten werden soll und eine alternative Lösung zu den aus dem Stand der Technik bekannten Einrichtungen geschaffen wird.

### Lösung

Die vorstehend genannte Aufgabe wird durch ein Luftleitelement für einen Luftausströmer gelöst, aufweisend eine Luftleitfläche und zwei im Wesentlichen gegenüberliegende Lagerbereiche, über welche das Luftleitelement verschwenkbar lagerbar ist, wobei mindestens einer der Lagerbereiche einen Lagertopf aufweist, in dem ein Reibelement angeordnet ist.

Das Luftleitelement kann beispielsweise als Lamelle ausgebildet sein, wie sie für Luftausströmer bereits in verschiedenen Ausführungen bekannt ist. Das Luftleitelement weist dabei eine Luftleitfläche auf, entlang derer Luft ausströmt und abgelenkt wird. Die Lagerung des Luftleitelements erfolgt über die Lagerbereiche, die sich im Regelfall an den gegenüberliegenden Schmalseiten der Lamelle befinden. Das hierin beschriebene Luftleitelement weist an mindestens einem der Lagerbereiche einen Lagertopf auf, in dem das Reibelement aufgenommen ist. Gegenüber dem Stand der Technik kann daher ein Lagerbolzen in dem Lagertopf mit dem Reibelement aufgenommen werden. Vorteilhafterweise befindet sich das Reibelement stets in einer festen Anordnung gegenüber dem Luftleitelement. Wird das Luftleitelement verschwenkt und kommt es beispielsweise zu einer Verlagerung oder Auslenkung des Luftleitelements, wird die Position des Reibelements relativ zu dem Luftleitelement bzw. der Luftleitfläche des Luftleitelements nicht verändert. Zusätzlich wird die erforderliche Bedienkraft zum Verschwenken der Lamelle in radialer Richtung zwischen dem Reibelement und einem darin einsetzbaren Lagerbolzen erreicht.

Der Lagertopf bildet eine Tasche bzw. Aufnahme für das Reibelement aus, das darin gelagert wird. Das Reibelement kann rotationssymmetrisch ausgebildet sein und beispielsweise eine ringförmige Gestalt aufweisen. Das Reibelement kann aber auch nur eine rotationssymmetrische Öffnung aufweisen, in welcher ein Lagerbolzen aufgenommen wird, und an seinem äußeren Umfang eine polygonale Form aufweisen. Entsprechend kann dann auch der Lagertopf eine rotationssymmetrische oder eine polygonale Aufnahme für das Reibelement ausbilden. In weiteren Ausführungen ist das Reibelement als Weichkomponente in einem 2-Komponenten Verfahren, bspw. in einem 2K-Spritzgussverfahren, direkt in den Lagertopf gespritzt und fest mit dem Lagertopf verbunden. In noch weiteren 2K-Verfahren kann das Reibelement als Weichkomponente auch direkt an einen Lagerbolzen, bspw. des Luftleitelements, angespritzt werden. Reibelement und Luftleitfläche sind daher stets zueinander definiert ausgerichtet.

Die offene Seite des Lagertopfs kann der Luftleitfläche abgewandt sein. Das Einsetzen des Reibelements ist daher einfach möglich. Zudem ist es auch möglich, beispielsweise ein Reibelement auszutauschen, falls dies notwendig sein sollte.

Der Lagertopf kann an seiner geschlossenen Seite eine Rastöffnung aufweisen. Die geschlossene Seite liegt dabei der offenen Seite des Lagertopfs gegenüber. Die Rastöffnung dient zur Aufnahme eines Rastabschnitts des Lagerbolzens, der in den Lagertopf eingesetzt wird. Hierüber wird zusätzlich erreicht, dass das Luftleitelement keine oder nur eine sehr geringe Auslenkung beim Verschwenken erfährt. Dabei ist wesentlich, dass nicht, wie im Stand der Technik üblich, ein Lagerzapfen auf einem Reibelement aufliegt und dabei ein Druck auf die Lamelle eine Verlagerung des Lagerzapfens bewirken kann. Bei dem hierin beschriebenen Luftleitelement kann über die Rastöffnung und einen Lagerbolzen die Position des Luftleitelements definiert werden. Die Reibung erfolgt dabei nicht an der Kontaktstelle zwischen dem Lagerbolzen und der die Rastöffnung umgebenden Wand der geschlossenen Seite sondern zwischen dem Reibelement und der daran anliegenden umlaufenden Wandfläche des Lagerbolzens. Der Lagerbolzen weist dabei zwei Bereiche auf, wobei über einen ersten Bereich die Reibung erzeugt wird und über den zweiten Bereich die Verrastung und Lagerung erfolgt.

Das Reibelement ist dabei entsprechend so auszulegen, dass eine definierte Reibung an dem Lagerbolzen erreicht wird. Vorzugsweise kann dabei der Innendurchmesser der Öffnung des Reibelements kleiner als der Außendurchmesser des Lagerbolzens in dem entsprechenden anliegenden Abschnitt sein.

Die Schwenkachse des Luftleitelements und die Mittenachse des Reibelements können dabei koaxial zueinander verlaufen. Hierdurch werden die Dämpfung und die Einstellung definierter Bedienkräfte weiter verbessert, da die Reibung im Bereich der Schwenkachse erfolgt. Ferner können die Lagerachse des Lagerzapfens bzw. dessen Längsachse und die Schwenkachse des Luftleitelements sowie die Mittenachse des Reibelements koaxial zueinander verlaufen.

Das Reibelement kann aus einem beliebigen Weichmaterial bestehen. Allgemein kann als Material für das Reibelement ein Elastomer verwendet werden. In weiteren Ausführungen kann das Reibelement aus Silikon oder einem thermoplastischen Elastomer (TPE) bestehen oder Silikon oder ein thermoplastisches Elastomer (TPE) aufweisen. Solche Materialien und Werkstoffe eignen sich insbesondere für Reib- bzw. Dämpfungselemente, weil hierüber bei einem geringen Verschleiß der Reibelemente über einen langen Benutzungszeitraum eine definierbare Dämpfung bzw. Reibung erreicht werden kann. Zudem sind die Materialien über einen weiten Temperaturbereich, entsprechend deren Zusammensetzung und Auswahl, bei gleichen mechanischen Eigenschaften einsetzbar.

Die vorstehend genannte Aufgabe wird auch durch einen Luftausströmer mit mindestens einem Luftleitelement gelöst, wobei - das mindestens eine Luftleitelement über mindestens einen Lagerbolzen verschwenkbar an einem Gehäuse des Luftausströmers gelagert und der Lagerbolzen in dem Lagertopf des Luftleitelements aufgenommen ist, und- das Reibelement an dem Lagerbolzen anliegt.

Über den Lagerbolzen ist das Luftleitelement verschwenkbar im Gehäuse des Luftausströmers gelagert. Die Reibung zur Einstellung einer definierten Bedienkraft beim Verschwenken des Luftleitelements wird zwischen dem Reibelement und dem Lagerbolzen erzeugt. Wesentlicher Vorteil ist hierin, dass das Reibelement dem Luftleitelement zugeordnet sein kann.

Mindestens ein Lagerbolzen kann dabei an dem Wandabschnitt des Gehäuses angeordnet sein. Das Gehäuse kann auch mehrere Lagerbolzen aufweisen, die entsprechend so ausgebildet sind, dass die Lagerbolzen des Gehäuses in den Lagertöpfen der Luftleitelemente aufgenommen und von Reibelementen umgeben sind. Dabei können die Luftleitelemente auch einen gegenüberliegenden Lagerbereich mit jeweils einem Lagertopf aufweisen, in dem ein Reibelement aufgenommen ist.

In weiteren Ausführungsformen können mindestens ein Lagerbolzen und/oder ein Lagertopf an einer Leiste angeordnet sein. Die Leiste dient zur Befestigung der Lamellen und trägt die Lagerbolzen und/oder die Lagertöpfe, wobei zwischen den Lagerbolzen und den die Lagerbolzen umgebenden Reibelementen die Reibung zur Erzeugung einer definierten Bedienkraft erzeugt wird.

Die Leiste kann von außen am Gehäuse des Luftausströmers anliegen, wobei der mindestens eine Lagerbolzen durch eine Öffnung des Gehäuses geführt ist. Bei der Montage des Luftausströmers werden die Reibelemente in die Lagertöpfe der Luftleitelemente eingesetzt. Anschließend werden die Luftleitelemente in das Gehäuse eingebracht und die Leiste mit den Lagerbolzen von außen an das Gehäuse geführt. Die Leiste wird nun durch die Öffnungen in der Gehäusewand eingesetzt, wobei die Lagerbolzen in die Lagertöpfe und die Reibelemente eingesetzt werden. Es ist daher möglich, sowohl die Lamellen zu befestigen als auch die Erzeugung von Bedienkräften über die Leiste zu erzeugen und bereitzustellen.

Es können ferner sämtliche Luftleitelemente mit einer einzigen Leiste fixiert werden. Hierdurch ergeben sich auch geringe Toleranzketten. Dies ist insbesondere vorteilhaft zu bewerten, da die Anzahl der benötigten Komponenten und damit die gesamten Toleranzen sinken.

Darüber hinaus kann der mindestens eine Lagerbolzen einen Rastabschnitt aufweisen, der im eingesetzten Zustand die Rastöffnung des Lagertopfs hintergreift. Die Befestigung der Luftleitelemente und deren abzugssichere Lagerung erfolgt daher über die Rastabschnitte der Lagerbolzen. Die Bereitstellung des Luftausströmers wird vereinfacht, da nach dem Einsetzen der Lagerbolzen die Rastabschnitte die Rastöffnung hintergreifen und damit die Anordnung Lagerbolzen zu Lagertopf und Reibelement gesichert wird. Das Hintergreifen der Rastabschnitte kann durch ein Geräusch beim Einsetzen wahrgenommen werden. Hierüber wird zusätzlich eine Rückmeldung über die sichere Montage bereitgestellt.

In weiteren Ausführungsformen ist es beispielsweise möglich, dass nur eine von der gesamten Anzahl der Luftleitelemente abweichende Anzahl an Luftleitelementen einen Lagertopf aufweist. Entsprechend kann dann die Leiste auch nur eine der Anzahl der Luftleitelemente mit Lagertopf entsprechende Anzahl an Lagerbolzen aufweisen. Die anderen Lamellen können über einfach ausgebildete Lagerzapfen gehalten werden, die ebenfalls an der Leiste, bspw. über dort angeordnete Lagertöpfe mit Reibelementen, angeordnet sein können.

Weiterhin kann die Lagerung der Luftleitelemente auch nur an einer Seite über eine solche Leiste erfolgen. Die Luftleitelemente können an dem gegenüberliegenden Lagerbereich über herkömmliche Lagerzapfen, die am Lagerbereich der Luftleitelemente angeordnet sind, in entsprechenden Öffnungen oder Lagertöpfen in einer Gehäusewand angeordnet sein. Anstelle einer solchen Ausführungsform können auch an der Gehäusewand eines Luftausströmers herkömmliche Lagerzapfen angeordnet sein, die in entsprechende Lageröffnungen an den Lagerbereichen der Luftleitelemente eingreifen. Die Endmontage und das "Verrasten" erfolgt dann über die Leiste, die am gegenüberliegenden Gehäuseabschnitt des Luftausströmers eingebracht wird, wobei die Lagerbolzen die Öffnungen in der Gehäusewand durchgreifen und in die Lagertöpfe mit den Reibelementen eingesetzt werden, bis die Rastabschnitte der Lagerbolzen die Rastöffnungen der Lagertöpfe hintergreifen. Analog kann auch eine Befestigung erfolgen, wenn die Leiste Lagertöpfe aufweist, in welchen dann die Lagerbolzen der Luftleitelemente aufgenommen werden.

Damit ein Hintergreifen der Rastöffnungen möglich ist, weisen die Luftleitelemente in diesem Bereich eine Öffnung oder Aussparung auf, die zur Aufnahme der Rastabschnitte dient. In weiteren Ausführungen kann auch die Leiste solche Öffnungen aufweisen, damit ein Hintergreifen der Rastöffnungen möglich ist, wenn Lagertöpfe an der Leiste angeordnet sind.

Das Gehäuse des Luftausströmers und die Luftleitelemente können aus einem Kunststoff oder einem Kunststoffverbund bestehen und sind daher in einem Spritzgussprozess in hoher Stückzahl kostengünstig und schnell zu fertigen. Weiterhin können die verwendeten Kunststoffe in Hinblick auf deren Wiederverwendbarkeit ausgewählt werden, sodass der Luftausströmer und auch die Luftleitelemente umweltrelevanten Gesichtspunkten Rechnung tragen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine perspektivische Darstellung eines Luftausströmers;
- Fig. 2: eine Vorderansicht von Komponenten des Luftausströmers von Fig. 1;
- Fig. 3: eine schematische Darstellung von Luftleitelementen und einer Leiste des Luftausströmers von Fig. 1;
- Fig. 4: eine perspektivische Darstellung des Gehäuses des Luftausströmers von Fig. 1;
- Fig. 5: eine schematische Darstellung der Leiste des Luftausströmers von Fig. 1;
- Fig. 6: eine perspektivische Darstellung eines Luftleitelements des Luftausströmers von Fig. 1;
- Fig. 7: eine weitere Darstellung des Luftleitelements von Fig. 6;
- Fig. 8: eine schematische Schnittansicht durch die Anordnung von Fig. 3; und
- Fig. 9: eine vergrößerte Ansicht der Darstellung von Fig. 8.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind.

### Ausführliche Beschreibung eines Ausführungsbeispiels

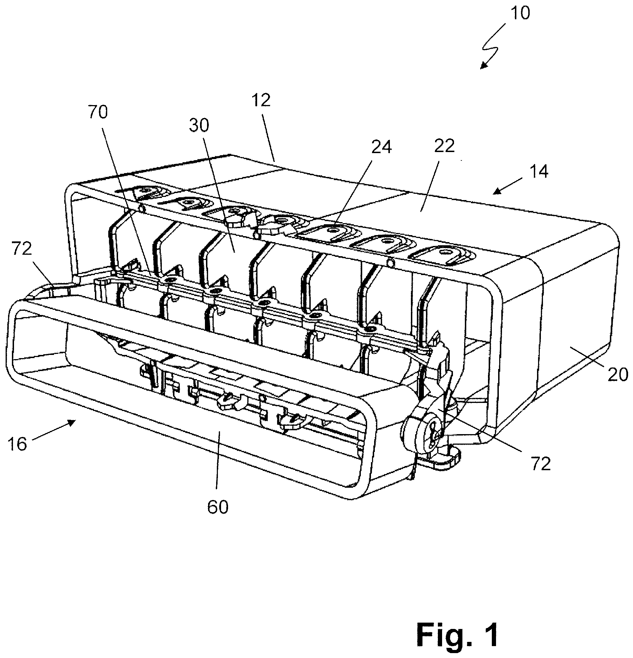

Fig. 1 zeigt eine perspektivische Darstellung eines Luftausströmers 10 eines beispielhaften Ausführungsbeispiels. Der Luftausströmer 10 weist ein Gehäuse 12 auf, das einen Luftkanal 18 umgibt. In dem Gehäuse 12 sind zudem Luftleitelemente 30 verschwenkbar gelagert. Der Luftausströmer 10 weist eine Lufteintrittsöffnung 14 und eine Luftaustrittsöffnung 16 auf, wobei einströmende Luft über die Lufteintrittsöffnung 14 den Luftkanal 18 durchströmt und über die Luftaustrittsöffnung 16 austritt. Die durchströmende Luft kann über die Luftleitelemente 30 und ein rahmenförmiges Luftleitelement 60 abgelenkt werden.

Die Luftleitelemente 30 sind über eine Koppeleinrichtung mit zwei parallel verlaufenden Koppelstangen 70 miteinander gekoppelt. Die Koppelstangen 70 sind an ihren Enden miteinander verbunden und weisen jeweils einen Arm 72 auf, welcher mit dem rahmenförmigen Luftleitelement 60 verbunden ist. Das rahmenförmige Luftleitelement 60 weist an den gegenüberliegenden schmalen Seiten abstehende Lagerstifte (in den Figuren nicht dargestellt) auf. Die Lagerstifte sind in Öffnungen an den vorderen Abschnitten der Arme 72 aufgenommen, sodass das rahmenförmige Luftleitelement 60 um die Lagerstifte verschwenkt werden kann, um eine entsprechende Luftablenkung nach oben und unten zu erreichen. Zusätzlich können die Luftleitelemente 30 über das rahmenförmige Luftleitelement 60 nach links und rechts verschwenkt werden, wobei eine Bewegung des rahmenförmigen Luftleitelements 60 über die Arme 72 eine Bewegung der Koppeleinrichtung mit den Koppelstangen 70 bewirkt, die über entsprechende Koppelzapfen 34 der Luftleitelemente 30 abseits der Schwenkachsen durch die Luftleitelemente 30 mit diesen gekoppelt sind.

Das Gehäuse 12 des Luftausströmers 10 sowie die Luftleitelemente 30, die Koppelstange 70 und das rahmenförmige Luftleitelement 60 können aus Kunststoff bestehen und sind daher in einem Spritzgussprozess in hoher Stückzahl kostengünstig und schnell herstellbar. Die einzelnen Bestandteile können aus verschiedenen Kunststoffen und Zusammensetzungen bestehen. Dabei können die verschiedenen Bestandteile auch eine zueinander verschiedene Farbgebung aufweisen und verschiedene mechanische Eigenschaften aufweisen.

Die Luftleitelemente 30 weisen gegenüberliegende Lagerbereiche auf, über welche die Luftleitelemente 30 verschwenkbar im Gehäuse 12 gelagert sind. An einem Lagerbereich weisen die Luftleitelemente 30 Lagerzapfen 32 auf, die in Lageröffnungen 24 des Gehäuses 12 aufgenommen sind. An den gegenüberliegenden Lagerbereichen weist ein Teil der Luftleitelemente 30 einen Lagertopf 36 auf, über welchen diese mit dem Gehäuse 12 über eine Leiste 50 drehbar gelagert sind.

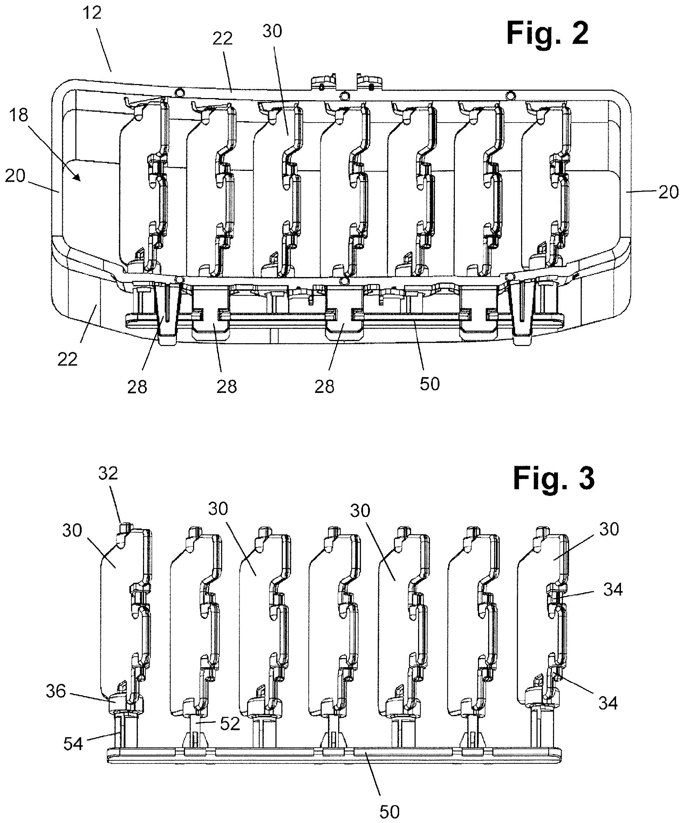

Fig. 2 zeigt eine Vorderansicht von Komponenten des Luftausströmers 10 von Fig. 1. Fig. 2 zeigt einen verschwenkten Zustand der Luftleitelemente 30. Die Luftleitelemente 30 sind zwischen den gegenüberliegenden Gehäusewänden 22 verschwenkbar gelagert. An dem oberen Lagerbereich sind die Lagerzapfen 32 in den Lageröffnungen 24 aufgenommen. An dem unteren Lagerbereich erfolgt die Lagerung über die Leiste 50, von der aus sich Lagerbolzen 56 und Lagerzapfen 52 erstrecken, die zur verschwenkbaren Lagerung und Befestigung der Luftleitelemente 30 vorgesehen sind. Die Leiste 50 besteht ebenfalls aus einem Kunststoff und wird von unten in die Gehäusewand 22 eingesetzt, wobei die Lagerzapfen 52 und die Lagerbolzen 56 Öffnungen 26 in der Gehäusewand 22 durchdringen.

Fig. 3 zeigt eine schematische Darstellung von Luftleitelementen 30 und der Leiste 50 des Luftausströmers 10. Der Luftausströmer 10 weist sieben Luftleitelemente auf, wobei lediglich vier Luftleitelemente 30 einen Lagertopf 36 aufweisen. Die anderen drei Luftleitelemente weisen an ihrem oberen Lagerbereich einen Lagerzapfen 32 und an dem gegenüberliegenden Lagerbereich einen kleinen Lagertopf auf, in welche die Lagerzapfen 52 eingreifen. Diese Luftleitelemente sind daher über die Lagerzapfen 52 und die Lagerzapfen 32 drehbar gelagert. Sämtliche Luftleitelemente 30 weisen zwei Koppelzapfen 34 auf. Die Koppelzapfen 34 sind mit jeweils einer Koppelstange 70 der Koppeleinrichtung verbunden. Die Koppelstangen 70 verlaufen parallel zueinander und sind über ihre Endabschnitte miteinander verbunden. Von diesen Endabschnitten erstrecken sich die Arme 72.

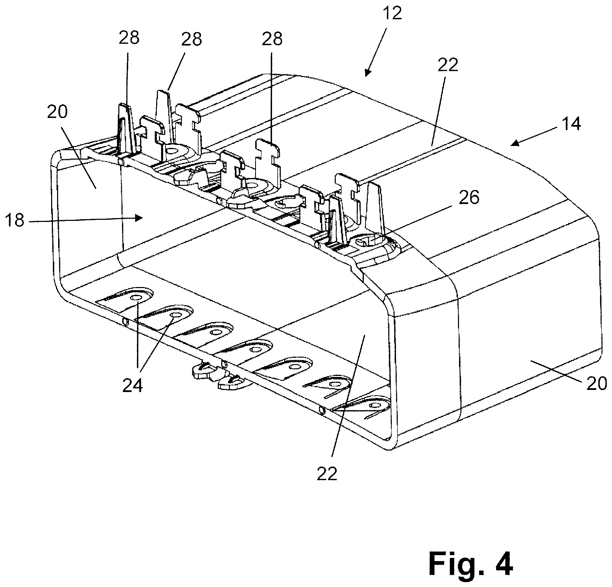

Fig. 4 zeigt eine perspektivische Darstellung des Gehäuses 12 des Luftausströmers 10. In Fig. 4 ist die Unterseite mit Blick auf die untere Gehäusewand 22 dargestellt. An der Unterseite des Gehäuses 12 befindet sich eine Vielzahl von Öffnungen 26. In diese Öffnungen 26 ragen die Lagerzapfen 52 und die Lagerbolzen 56 der Leiste 50. Über Halteelemente 28 wird die Leiste 50 gehalten. Weitere Halteelemente 28 dienen zur Befestigung des Gehäuses 12 an anderen Komponenten. Die Halteelemente 28 zur Befestigung der Leiste 50 wirken mit Halteabschnitten im Bereich der Lagerbolzen 52 zusammen. Hierzu weisen die Halteelemente 28 zur Aufnahme der Leiste 50 an gegenüberliegenden Seiten Einkerbungen auf, welche mit entsprechenden Vorsprüngen der Leiste 50 zusammenwirken.

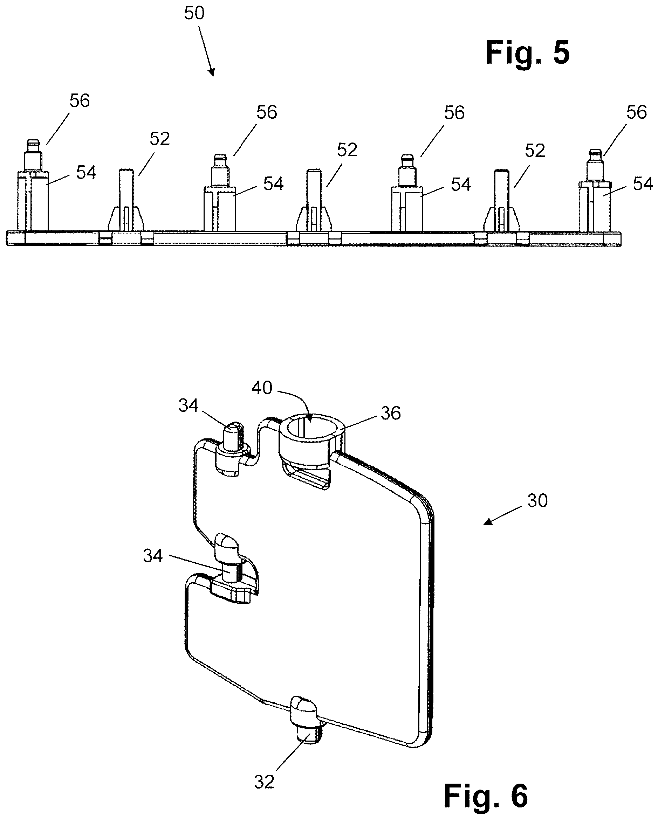

Fig. 5 zeigt eine schematische Darstellung der Leiste 50 des Luftausströmers 10 in einer Vorderansicht. Die Leiste 50 weist eine geradlinige Basis auf, von der aus sich Verbindungselemente 54 und Lagerzapfen 52 nach oben erstrecken. An den Verbindungselementen 54 sind die Lagerbolzen 56 angeordnet. Im verrasteten Zustand der Leiste 50 ragen die Lagerbolzen 56 in den Luftkanal 18. Die oberen Enden der Lagerzapfen 52 ragen durch die weiteren Öffnungen 26 ebenfalls in das Innere des Gehäuses 12 in den Luftkanal 18. Über die Lagerzapfen 52 werden die Luftleitelemente mit dem kleineren Lagertopf drehbar gelagert, wobei die oberen Enden der Lagerzapfen 52 direkt in Anlage mit den Lagertöpfen dieser Luftleitelemente gelangen.

Die Lagerbolzen 56 sind in den Lagertöpfen 36 der Luftleitelemente 30 aufgenommen, wobei die Rastabschnitte 58 über eine Rastöffnung 38 in den Lagertöpfen 36 verrastet sind.

Fig. 6 zeigt eine perspektivische Darstellung eines Luftleitelements 30 des Luftausströmers 10. Das Luftleitelement 30 weist im mittleren Bereich der Luftleitfläche eine flächige Erstreckung auf, wobei über die Luftleitfläche die Luftablenkung erfolgt. An den gegenüberliegenden Lagerabschnitten weist das Luftleitelement 30 an der einen Seite einen Lagerzapfen 32 und auf der gegenüberliegenden Seite einen Lagertopf 36 auf. Der Lagertopf 36 weist eine Aufnahme 40 auf. In die Aufnahme 40 wird ein ringförmiges Reibelement 80 eingesetzt. Fig. 6 zeigt das Luftleitelement 30 in einer zur Ansicht von Fig. 1 um 180° gedrehten Darstellung.

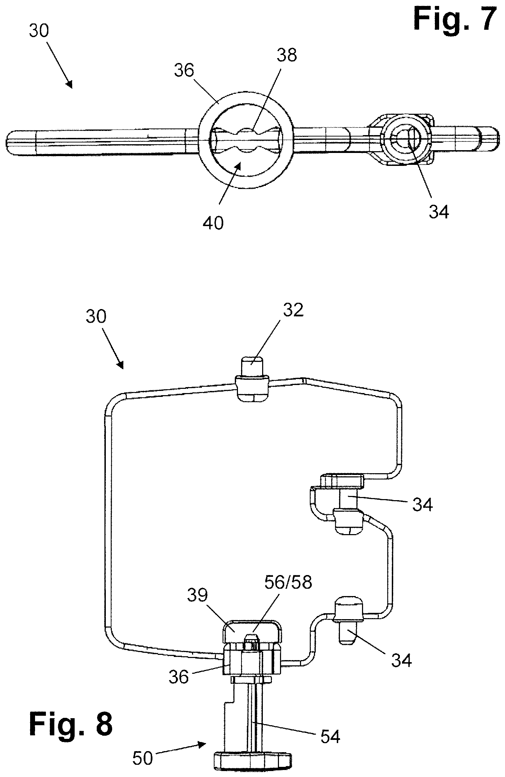

Fig. 7 zeigt eine weitere Darstellung des Luftleitelements 30 von Fig. 6. Fig. 7 zeigt dabei eine Draufsicht auf den Lagerbereich des Luftleitelements 30 mit dem Lagertopf 36. An seiner geschlossenen Seite weist der Lagertopf eine Rastöffnung 38 auf. Die Rastöffnung 38 ist so ausgebildet, dass der Rastabschnitt 58 des Lagerbolzens 56 eingesetzt und die Rastöffnung 38 hintergreifen kann. Hierdurch wird eine Verrastung sichergestellt.

Fig. 8 zeigt eine schematische Schnittansicht durch die Anordnung von Fig. 3. Die Leiste 50 ist so ausgestaltet, dass der Verbindungsabschnitt 54 außen an der Gehäusewand 22 anliegt. Hierzu können sowohl an einer Gehäusewand 22 als auch an dem Verbindungsabschnitt 54 und der Leiste 50 entsprechende Vorsprünge und Anlageflächen ausgebildet sein. Der Lagerzapfen 56 ragt durch die Öffnung 26 in den Luftkanal 28 und ist innerhalb des Lagertopfs 36 in der Aufnahme 40 aufgenommen. Der Rastabschnitt 58 ragt dabei in einen Freiraum 39 des Luftleitelements 30.

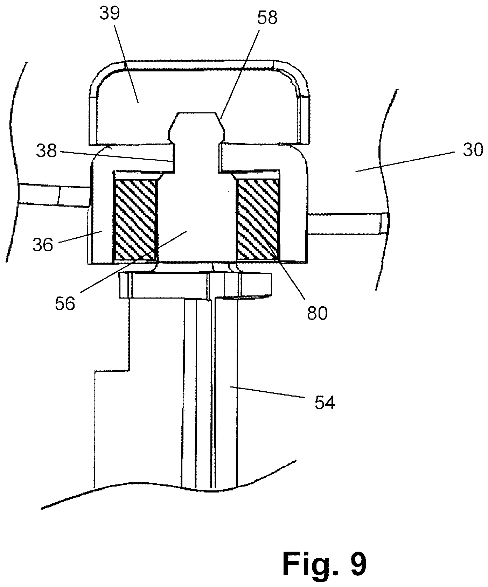

Fig. 9 zeigt eine vergrößerte Ansicht der Darstellung von Fig. 8. In dem Lagertopf 36 ist das ringförmige Reibelement 80 aufgenommen. Zusätzlich ist darin der Lagerbolzen 56 aufgenommen, wobei die äußere Umfangsfläche des Lagerbolzens 56 in Anlage mit der inneren Umfangsfläche des ringförmigen Reibelements 80 steht. Die Bedienkraft zum Verschwenken der Luftleitelemente 30 wird daher durch das Moment zum Verschwenken in der Lagerstelle zwischen dem Lagerbolzen 56 und dem Reibelement 80 erzeugt. Die Kraft mit welcher das Reibelement 80 auf den Lagerbolzen 56 wirkt, bestimmt sich dabei unter anderem von der Beschaffenheit der aneinander anliegenden Oberflächen des Lagertopfes 36 und des Lagerbolzens 56 sowie dem Material und der Oberfläche des Reibelements 80. Beispielsweise kann der innere Durchmesser des Reibelements 80 geringer sein als der äußere Durchmesser des Lagerbolzens 56.

Wie in Fig. 9 gezeigt, ragt der Rastabschnitt 58 durch die Rastöffnung 38 und hintergreift die Rastöffnung 38. Damit ein Einsetzen des Rastabschnitts 56 in die Rastöffnung 38 ermöglicht wird, weist der Rastabschnitt 58 eine entsprechende Geometrie auf. Ein Abziehen und Herausgleiten des Rastabschnitts 58 wird entsprechend durch seine Geometrie am unteren Abschnitt verhindert.

Das Reibelement 80 kann beispielsweise aus Silikon oder einem thermoplastischen Elastomer (TPE) bestehen. Derartige Materialien eigenen sich insbesondere zur Erzeugung von Reibmomenten zur Einstellung einer definierten Bedienkraft beim Verschwenken der Luftleitelemente 30. Vorteilhaft ist bei dem hierin beschriebenen Luftausströmer 10, dass über eine einzige Leiste 50 eine Verriegelung und Befestigung sämtlicher Luftleitelemente 30 erfolgen kann. Wesentlich ist zudem, dass hierüber auch die Toleranzkette reduziert wird. Es können daher Vorgaben leichter eingehalten werden.

Ein weiterer wichtiger Aspekt der hierin beschriebenen Lagerung der Luftleitelemente 30 ist zudem, dass die Bedienkraft im Bereich der Lagerachse erzeugt wird. Ein weiterer Vorteil besteht darin, dass die Anordnung des Reibelements 80 am Luftleitelement 30 sicherstellt, dass deren Position zueinander beibehalten wird. Beim Verschwenken der Luftleitelemente 30 kommt es daher nicht durch einen Lagerzapfen des Luftleitelements 30 zu einem Stauchen des Reibelements 80 und damit zu einer unbeabsichtigten Auslenkung des Luftleitelements 30. Vielmehr wird über die zusätzliche Lagerung aufgrund des Lagerbolzens 56 und des Rastabschnitts 58, der in der Rastöffnung 38 aufgenommen ist, die Rotationsachse bzw. Schwenkachse des Luftleitelements 30 definiert. Die Reibung wird dabei nicht im Bereich der Lagerung erzeugt sondern in einem dazu beabstandeten Bereich. Dadurch wird einerseits sichergestellt, dass die Luftleitelemente 30 synchron verschwenkt werden können, ohne dass es beim Verschwenken in den verschiedenen Stellungen zu Abweichungen von ihrer vorgegebenen Position kommt, und andererseits erreicht, dass die Dämpfung und damit Einstellung der erforderlichen Bedienkräfte im Bereich der Schwenkachsen erfolgt.

Ein weiterer entscheidender Vorteil der hierin beschriebenen Lagerung ist durch die Leiste 50 bereitgestellt, welche eine Befestigung und Arretierung sämtlicher Luftleitelemente 30 durch das Einbringen der Leiste 50 in das Gehäuse 12 bereitstellt. Mit einem Bearbeitungsschritt können daher sämtliche Luftleitelemente 30 befestigt werden.

### Bezugszeichenliste

- 10: Luftausströmer
- 12: Gehäuse
- 14: Lufteintrittsöffnung
- 16: Luftaustrittsöffnung
- 18: Luftkanal
- 20: Gehäusewand
- 22: Gehäusewand
- 24: Lageröffnung
- 26: Öffnung
- 28: Halteelement
- 30: Luftleitelement
- 32: Lagerzapfen
- 34: Koppelzapfen
- 36: Lagertopf
- 38: Rastöffnung
- 39: Freiraum
- 40: Aufnahme
- 50: Leiste
- 52: Lagerzapfen
- 54: Verbindungselement
- 56: Lagerbolzen
- 58: Rastabschnitt
- 60: Luftleitelement
- 70: Koppelstange
- 72: Arm
- 80: Reibelement

## Patentansprüche

1. Luftleitelement : (30) für einen Luftausströmer, aufweisend eine Luftleitfläche und zwei im Wesentlichen gegenüberliegende Lagerbereiche, über welche das Luftleitelement (30) verschwenkbar lagerbar ist, **dadurch gekennzeichnet, dass**
mindestens einer der Lagerbereiche des Luftleitelements einen Lagertopf (36) aufweist, in dem ein Reibelement (80) angeordnet ist.

2. Luftleitelement nach Anspruch 1, wobei die offene Seite des Lagertopfs (36) der Luftleitfläche abgewandt ist.

3. Luftleitelement nach Anspruch 1 oder 2, wobei der Lagertopf (36) an seiner geschlossenen Seite eine Rastöffnung (38) aufweist.

4. Luftleitelement nach einem der Ansprüche 1 bis 3, wobei die Schwenkachse des Luftleitelements (30) und die Mittenachse des Reibelements (80) koaxial zueinander verlaufen.

5. Luftleitelement nach einem der Ansprüche 1 bis 4, wobei das Reibelement (80) aus Silikon oder einem thermoplastischen Elastomer besteht oder Silikon oder ein thermoplastisches Elastomer aufweist.

6. Luftausströmer : (10) mit mindestens einem Luftleitelement (30) nach einem der Ansprüche 1-5 , wobei
- das mindestens eine Luftleitelement (30) über mindestens einen Lagerbolzen (56) verschwenkbar in einem Gehäuse (12) des Luftausströmers (10) gelagert und der Lagerbolzen (56) in dem Lagertopf (36) des Luftleitelements (30) aufgenommen ist, und- das Reibelement (80) an dem Lagerbolzen (56) anliegt.

7. Luftausströmer nach Anspruch 6, wobei mindestens ein Lagerbolzen (56) an einem Wandabschnitt des Gehäuses (12) angeordnet sind.

8. Luftausströmer nach Anspruch 6 oder 7, wobei mindestens ein Lagerbolzen (56) und/oder ein Lagertopf an einer Leiste (50) angeordnet sind.

9. Luftausströmer nach Anspruch 8, wobei die Leiste (50) von außen am Gehäuse (12) des Luftausströmers (10) anliegt und der mindestens eine Lagerbolzen (56) durch eine Öffnung (26) des Gehäuses (12) geführt ist.

10. Luftausströmer nach einem der Ansprüche 6 bis 9, wobei der mindestens eine Lagerbolzen (56) einen Rastabschnitt (58) aufweist, der im eingesetzten Zustand die Rastöffnung (38) des Lagertopfes (36) hintergreift.

## Claims

1. Air guide element (30) for an air vent, comprising an air guide surface and two substantially mutually opposite bearing regions by way of which the air guide element (30) can be mounted to be pivotable, **characterised in that** at least one of the bearing regions of the air guide element comprises a bearing pot (36) in which a friction element (80) is arranged.

2. Air guide element according to claim 1, wherein the open side of the bearing pot (36) is remote from the air guide surface.

3. Air guide element according to claim 1 or 2, wherein the bearing pot (36) has a detent opening (38) at its closed side.

4. Air guide element according to any one of claims 1 to 3, wherein the pivot axis of the air guide element (30) and the centre axis of the friction element (80) extend coaxially with respect to one another.

5. Air guide element according to any one of claims 1 to 4, wherein the friction element (80) consists of a silicone or a thermoplastic elastomer or comprises silicone or a thermoplastic elastomer.

6. Air vent (10) with at least one air guide element (30) according to any one of claims 1 to 5, wherein
- the at least one air guide element (30) is pivotably mounted in a housing (12) of the air vent (10) by way of at least one bearing pin (56) and the bearing pin (56) is received in the bearing pot (36) of the air guide element (30) and
- the friction element (80) bears against the bearing pin (56).

7. Air vent according to claim 6, wherein at least one bearing pin (56) is arranged at a wall section of the housing (12).

8. Air vent according to claim 6 or 7, wherein at least one bearing pin (56) and/or a bearing pot is or are arranged at a strip (50).

9. Air vent according to claim 8, wherein the strip (50) bears from outside against the housing (12) of the air vent (10) and the at least one bearing pin (56) is led through an opening (26) of the housing (12).

10. Air vent according to any one of claims 6 to 9, wherein the at least one bearing pin (56) has a detent section (58) which in the inserted state engages behind the detent opening (38) of the bearing pot (36).

## Revendications

1. Élément de guidage de l'air (30)
pour un élément diffuseur d'air, comprenant une surface de guidage d'air et deux zones d'appui sensiblement opposées, par lesquelles l'élément (30) peut être monté de manière pivotante, **caractérisé en ce que**
au moins une des zones de l'élément présente un pot de roulement (36),
dans lequel est disposé un élément de friction (80).

2. Élément de guidage d'air selon la revendication 1, dans lequel le côté ouvert du pot de palier (36) est détourné de la surface de guidage d'air.

3. Élément de guidage d'air selon la revendication 1 ou 2, dans lequel le pot de palier (36) présente une ouverture crantée (38) sur son côté fermé.

4. Élément de guidage d'air selon l'une des revendications 1 à 3, dans lequel l'axe de pivotement de l'élément de guidage d'air (30) et l'axe central de l'élément de friction (80) sont coaxiaux entre eux.

5. Élément de guidage d'air selon l'une quelconque des revendications 1 à 4, dans lequel l'élément de friction (80) est constitué de silicone ou d'un élastomère thermoplastique ou comprend du silicone ou un élastomère thermoplastique.

6. Diffuseur d'air (10)
avec au moins un élément de guidage d'air (30) selon l'une des revendications 1 à 5, dans lequel
l'élément de guidage d'air (30), au nombre d'au moins un, est monté pivotant dans un boîtier (12) de la sortie d'air (10) au moyen d'au moins un axe de palier (56) et l'axe de palier (56) est reçu dans le pot de palier (36) de l'élément de guidage d'air (30), et l'élément de friction (80) est en appui sur l'axe de palier (56).

7. Diffuseur d'air selon la revendication 6, dans lequel au moins un axe de palier (56) est disposé sur une partie de paroi du boîtier (12).

8. Diffuseur d'air selon la revendication 6 ou 7, dans lequel au moins un axe de palier (56) et/ou un pot de roulement est/sont disposé(s) sur une bande (50).

9. Diffuseur d'air selon la revendication 8, dans lequel la bande (50) repose contre l'extérieur du boîtier (12) du diffuseur d'air (10) et au moins un axe de palier (56) est guidé à travers une ouverture (26) du boîtier (12).

10. Diffuseur d'air selon l'une des revendications 6 à 9, dans lequel au moins un axe de palier (56) présente une section d'encliquetage (58) qui, à l'état inséré, s'engage derrière l'ouverture d'encliquetage (38) du pot de roulement (36).
